# DEMANDE DE BREVET EUROPEEN

(11) **EP 1 274 242 A1**
(43) Date de publication de la demande: **08.01.2003**
(21) Numéro de dépôt: 02077524.3
(22) Date de dépôt: 25.06.2002
(51) Int. Cl.: H04N 7/14

(54) **Mobile pour videoconférence**

(30) Priorité: 03.07.2001 FR 0108819
(71) Demandeur: Koninklijke Philips Electronics N.V., 5621 BA Eindhoven (NL)
(72) Inventeur: Bruzzone, Paul, Société Civile S.P.I.D., 75008 Paris (FR)
(74) Mandataire: Chaffraix, Jean

(57) **Abrégé**

La présente invention concerne un appareil de communication audiovisuelle (SB) et un procédé associé. Ledit appareil de communication audiovisuelle comprend deux voies de réception, une vidéo (VRP_B) et une audio (ARP_B), lesdites voies étant respectivement aptes à recevoir un signal vidéo (VS) et un signal audio (AS) issus d'un deuxième appareil de communication audiovisuelle (SA). Ledit appareil se caractérise en ce qu'il comporte des moyens de contrôle de retour (CNTRL) aptes à adapter une fréquence d'images (FR) dudit signal vidéo (VS) en fonction d'un signal bruit.

## Description

La présente invention concerne un appareil de communication audiovisuelle comprenant une voie de réception audio et une voie de réception vidéo, lesdites voies étant respectivement aptes à recevoir un signal vidéo et un signal audio issus d'un deuxième appareil de communication audiovisuelle. Elle concerne également un procédé de communication adapté audit appareil.

Elle trouve une application particulière dans le domaine de la téléphonie mobile.

La première édition du journal "Wireless Communications & Mobile Computing" de Janvier à Mars 2001, décrit un appareil de communication, ici un téléphone portable couramment appelé mobile, qui comporte un écran, une caméra et un module de réception radio permettant de communiquer avec un deuxième appareil de communication par vidéoconférence. La vidéoconférence via un téléphone mobile est un service dit de 3^{ème} génération, décrit notamment dans la norme IMT-2000 ("International Mobile Telecommunications") édité par l'ITU ("International Telecommunication Union "), et qui est intégré dans ledit mobile.

Lors d'une conversation par vidéoconférence entre un utilisateur et un interlocuteur, l'utilisateur d'un mobile aura des difficultés à entendre la voix de son interlocuteur si ce dernier se trouve dans un bruit ambiant important, ladite voix correspondant à un signal reçu par la voie de réception audio du mobile dudit utilisateur. Par conséquent, cela engendre une mauvaise compréhension de l'interlocuteur par l'utilisateur. Afin de résoudre ce problème, une solution serait d'augmenter le volume de la réception audio. Cependant, en augmentant ainsi le volume, on amplifie également le bruit. De plus, cette solution peut être gênante si l'utilisateur n'est pas seul et qu'il veut garder sa conversation confidentielle.

Aussi un problème technique à résoudre par l'objet de la présente invention est de proposer un appareil de communication audiovisuelle comprenant une voie de réception audio et une voie de réception vidéo, lesdites voies de réception étant respectivement aptes à recevoir un signal vidéo et un signal audio issus d'un deuxième appareil de communication audiovisuelle, ainsi qu'un procédé associé, qui permettraient notamment d'augmenter la qualité de compréhension entre deux utilisateurs d'appareils de communication audiovisuelle lors d'une vidéoconférence, et ce sans utiliser trop de ressources en terme de transmission de données, et sans consommer trop d'énergie.

Une solution au problème technique posé se caractérise, selon un premier objet de la présente invention, en ce que l'appareil de communication audiovisuelle comporte :
- des moyens de contrôle de retour aptes à adapter une fréquence d'images dudit signal vidéo en fonction d'un bruit, ledit signal audio comprenant ledit signal bruit.

Selon un second objet de la présente invention, cette solution se caractérise, en ce que le procédé de communication audiovisuelle comporte une étape :
- d'adaptation d'une fréquence d'images dudit signal vidéo en fonction d'un signal bruit, ledit signal audio comprenant ledit signal bruit.

Ainsi, comme on le verra en détail plus loin, grâce aux moyens de contrôle, on améliore le signal vidéo reçu lorsque le signal audio reçu se détériore. On se base sur le principe selon lequel un utilisateur dudit appareil de communication audiovisuelle interprète mieux ce que dit son interlocuteur lorsqu'il voit mieux son visage et notamment lorsqu'il voit mieux ses lèvres bouger. L'interprétation du signal audio reçu comporte un taux d'erreur qui est fonction du signal vidéo reçu. Plus une séquence d'images correspondant au signal vidéo est fluide, plus l'interprétation est facile.

La description qui suit, en regard des dessins annexés, le tout donné à titre d'exemple non limitatif, fera bien comprendre en quoi consiste l'invention.
- la Fig. 1 illustre de façon schématique un appareil de communication audiovisuelle selon l'invention,
- la Fig. 2 est un schéma de composants de l'appareil de communication audiovisuelle de la figure 1,
- la Fig. 3a est un schéma d'un cycle de réception d'un signal audio par l'appareil de communication audiovisuelle de la figure 1 lors de petites interférences,
- la Fig. 3b est un schéma d'un cycle de réception d'un signal audio par l'appareil de communication audiovisuelle de la figure 1 lors de grandes interférences,
- la Fig. 3c est un schéma d'un cycle de transmission d'un signal audio par l'appareil de communication audiovisuelle de la figure 1,
- la Fig. 3d est un schéma d'un cycle d'un signal seuil déterminé à partir du cycle de transmission du signal audio de la Fig. 3c,
- la Fig. 3e est un schéma d'un signal résultant d'un filtrage du signal audio de la Fig. 3a par le signal seuil de la Fig. 3d lors de petites interférences,
- la Fig. 3f est un schéma d'un signal résultant d'un filtrage du signal audio de la Fig. 3b par le signal seuil de la Fig. 3d lors de grandes interférences,
- la Fig. 4 représente un signal bruit échantillonné par l'appareil de communication audiovisuelle de la figure 1 et issu d'un deuxième appareil de communication audiovisuelle,
- la Fig. 5 est un organigramme d'un algorithme d'échantillonnage du signal bruit de la figure 4,
- la Fig. 6 illustre une fréquence d'images d'un signal vidéo reçu par l'appareil de communication audiovisuelle de la figure 1 adapté à un signal bruit, et
- la Fig. 7 est un organigramme d'un algorithme implémenté dans des moyens de contrôle dudit appareil de communication audiovisuelle de la figure 1.

Dans l'exposé qui suit, les fonctions ou structures bien connues de l'homme du métier ne seront pas décrites en détail car elles encombreraient inutilement la description.

Le présent exposé de l'invention a trait à un exemple d'appareil de communication audiovisuelle SB utilisé dans le domaine de la téléphonie mobile. Ledit appareil SB est un téléphone portable sans fil appelé également mobile. Le mobile est, par exemple, un mobile de génération 2G+ ou 3G basé sur des standards de communication 2G+ tels que GPRS ("General Packet Radio System"), EDGE("Enhanced Data Rates for Gsm Evolution") édités par l'ETSI ("European Telecommunications Standard Instutitute"), ou sur des standards de communication 3G tels que UMTS ("Universal Mobile Telecommunication System", IMT-2000 ("International Mobile Telecommunication") édités respectivement par 3GPP ("Third Generation Partnership Protocol") et l'ITU. Ces standards permettent d'avoir des taux de transmission de données adéquats et une grande flexibilité pour des communications multimédias telle qu'une communication par vidéoconférence.

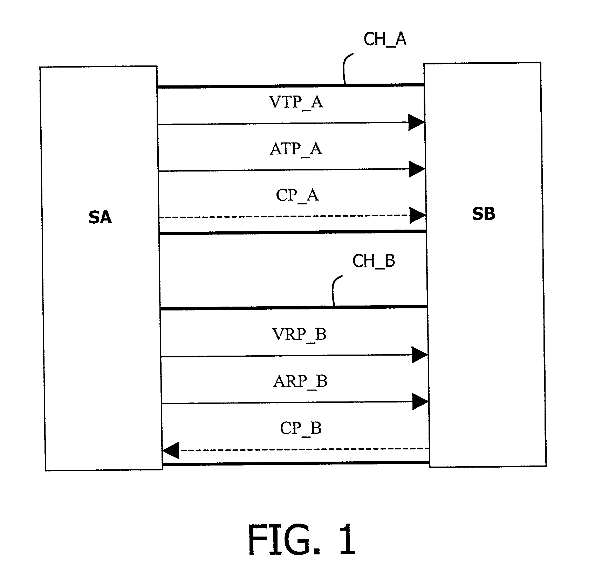

La figure 1 illustre de façon schématique un tel appareil SB. Il comporte un canal bidirectionnel CH_B comprenant trois sous-canaux : une voie de réception audio ARP_B, une voie de réception vidéo VRP_B et un canal de contrôle CP_B. Les deux premières voies sont respectivement aptes à recevoir un signal vidéo VS et un signal audio AS, issus d'un deuxième appareil de communication audiovisuelle SA.

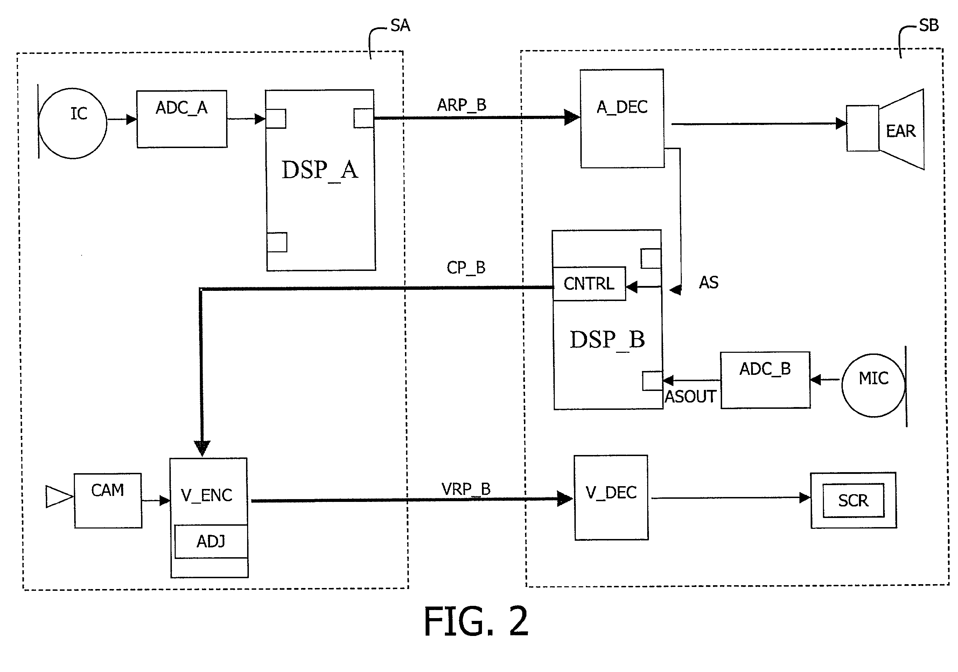

Ledit appareil de communication audiovisuelle SB comporte en outre un module de réception qui est composé des éléments suivants, comme le montre la figure 2.
- un processeur DSP_B apte à effectuer notamment un codage de signal numérique audio bien connu de l'homme du métier,
- un écouteur ou haut-parleur EAR,
- un microphone MIC,
- un convertisseur numérique ADC_B, bien connu de l'homme du métier, apte à transformer un signal analogique provenant du microphone MIC en un signal numérique ASOUT,
- un décodeur audio A_DEC,
- un décodeur vidéo V_DEC,
- un écran vidéo SCR, et
- des moyens de contrôle CNTRL aptes à adapter une fréquence d'images d'un signal vidéo en fonction d'un signal bruit, ledit signal vidéo étant reçu par la voie de réception vidéo VRP_B et issu d'une caméra CAM du deuxième appareil de communication audiovisuelle SA.

Le deuxième appareil de communication audiovisuelle SA quant à lui comporte également un canal bidirectionnel CH_A comprenant trois sous-canaux : un sous-canal ou voie d'émission audio ATP_A, un sous-canal ou voie d'émission vidéo VTP_A et un sous-canal de contrôle CP_A. Ce deuxième appareil SA comporte en outre un module de transmission qui est composé des éléments suivants.
- un processeur DSP_A apte à effectuer notamment un codage de signal numérique audio,
- un microphone MIC,
- un convertisseur numérique ADC_A apte à transformer un signal analogique provenant du microphone MIC en un signal numérique,
- un encodeur vidéo V_ENC,
- des moyens d'ajustement ADJ de la fréquence d'images de son encodeur vidéo V_ENC, et
- une caméra vidéo CAM.

Dans la suite de l'exposé, on parlera indifféremment, d'une part, de premier appareil de communication audiovisuelle SB ou de partie réceptrice SB, et, d'autre part, de deuxième appareil de communication audiovisuelle SA ou partie émettrice SA.

Les modules et éléments illustrés à la figure 2 permettent d'établir un appel "voix + vidéo" par vidéoconférence à partir du deuxième appareil de communication SA vers le premier appareil de communication SB. Dans un souci de simplification les modules et éléments permettant une opération inverse (appel à partir du premier mobile SB vers le deuxième mobile SA) ont été omis ici.

Lors d'une vidéoconférence, lorsqu'un interlocuteur A parle sur son mobile SA au niveau de son microphone MIC, dans le même temps, une séquence d'images montrant le visage dudit interlocuteur A est enregistrée par la caméra vidéo CAM et envoyée à un utilisateur B du premier mobile SB. Ledit premier mobile SB reçoit un signal vidéo VS par sa voie de réception vidéo VRP_B, ledit signal vidéo correspondant à la séquence d'images envoyée, et dans le même temps, un signal audio AS par sa voie de réception audio ARP_B. Par conséquent, l'utilisateur B entend son interlocuteur A au moyen de l'écouteur EAR et le voit au moyen de son écran vidéo SCR sur lequel la séquence d'images s'affiche.

Dans un milieu ambiant calme, il y a peu de problèmes de communication entre l'utilisateur B et son interlocuteur A. Cependant, dans un milieu ambiant bruyant, par exemple, lorsque l'interlocuteur A se trouve dans une rue où passent fréquemment des voitures, l'utilisateur B va avoir du mal à le comprendre.

Afin que l'utilisateur B comprenne mieux son interlocuteur A, le premier appareil de communication audiovisuelle SB comporte des moyens de contrôle de retour CNTRL aptes à adapter une fréquence d'images du signal vidéo VS en fonction d'un signal bruit, le signal audio AS comprenant ledit signal bruit NS et un signal parole AS_1. Ainsi, lorsque l'interlocuteur A parle, le signal audio AS comporte un "signal parole" et un signal bruit ambiant NS. Quand l'interlocuteur A ne parle pas, le signal audio AS comporte uniquement un signal bruit ambiant NS.
Dans la suite de l'exposé, on parlera indifféremment de signal bruit ou de bruit et de fréquence d'images courante FRc pour la fréquence d'images envoyée par le deuxième appareil de communication SA deuxième appareil de communication SB.

L'adaptation de la fréquence d'images d'un signal vidéo VS s'effectue selon les étapes suivantes.

**Dans une première étape 1),** on évalue le bruit ambiant NS qui parasite le deuxième mobile SA de l'interlocuteur A. Le bruit ambiant NS étant le même lorsque l'interlocuteur A parle ou non, pour plus des raisons évidentes de simplification, on évalue le bruit ambiant lorsque l'interlocuteur A ne parle pas.

**Dans une première sous-étape 1a),** on détermine au moins un intervalle de temps où l'interlocuteur A ne parle pas, i.e. au moins un intervalle de temps pendant lequel seul un signal bruit NS est reçu par la première voie de réception audio ARP_B ou encore pendant lequel aucun signal parole AS_1 n'est reçu par la première voie de réception audio ARP_B.

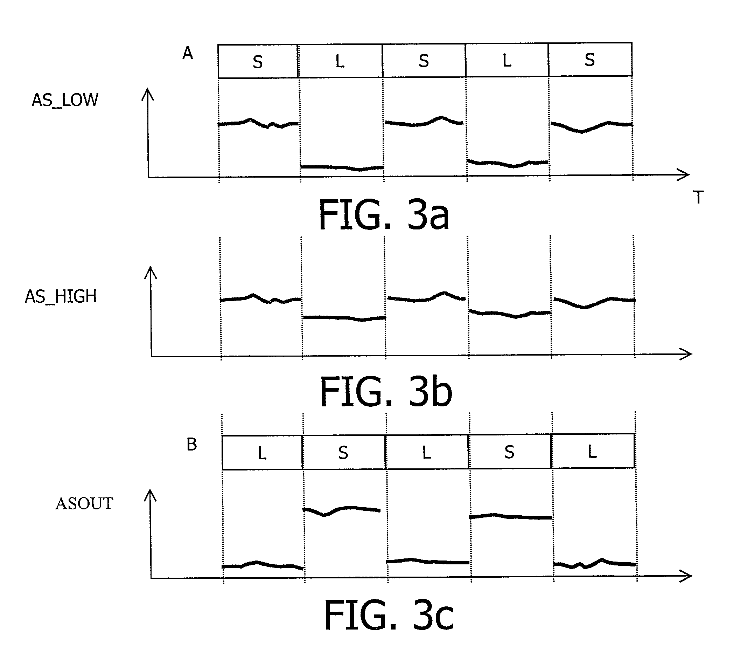

Les figures 3a à 3f illustre cette identification.

La figure 3a est un schéma d'un cycle de réception d'un signal audio AS_LOW par le premier appareil de communication audiovisuelle SB lors de petites interférences ou bruit ambiant NS faible, par exemple, lorsqu'il pleut faiblement là où se trouve l'interlocuteur A. Ce signal audio AS_LOW correspond à des intervalles de temps de parole S/écoute L de l'interlocuteur A.

De façon empirique, en moyenne, l'interlocuteur A parle 35 à 40% pendant un cycle de temps déterminé, et écoute 60-65% pendant ce même cycle de temps. Pour des soucis de simplification, on considère un cycle d'intervalles de 50-50% comme le montre la figure 3a.

La figure 3b est un schéma d'un cycle de réception d'un signal audio AS_HIGH par le premier appareil de communication audiovisuelle SB lors de grandes interférences ou bruit ambiant NS important, par exemple, lors de passages fréquents de voitures dans une rue où se promène l'interlocuteur A.

La figure 3c est un schéma d'un cycle de transmission d'un signal de sortie audio ASOUT par le premier appareil de communication audiovisuelle SB. Ce signal de sortie audio ASOUT est généré par le convertisseur ADC_B à partir d'un signal audio issu du microphone MIC.

On fait l'hypothèse que l'utilisateur B et l'interlocuteur A ne parlent pas en même temps. Comme on peut le voir en relation avec les figures précédentes, les intervalles de parole S de l'utilisateur B correspondent aux intervalles d'écoute L de l'interlocuteur A et vice et versa. Par la suite, déterminer les intervalles de temps où seul un signal bruit NS est reçu par la première voie de réception ARP_B correspond à déterminer des intervalles de temps où un signal de sortie audio ASOUT est en général transmis par le premier appareil de communication SB au deuxième appareil de communication SA, i.e. lors des intervalles de temps de parole S de l'utilisateur B.

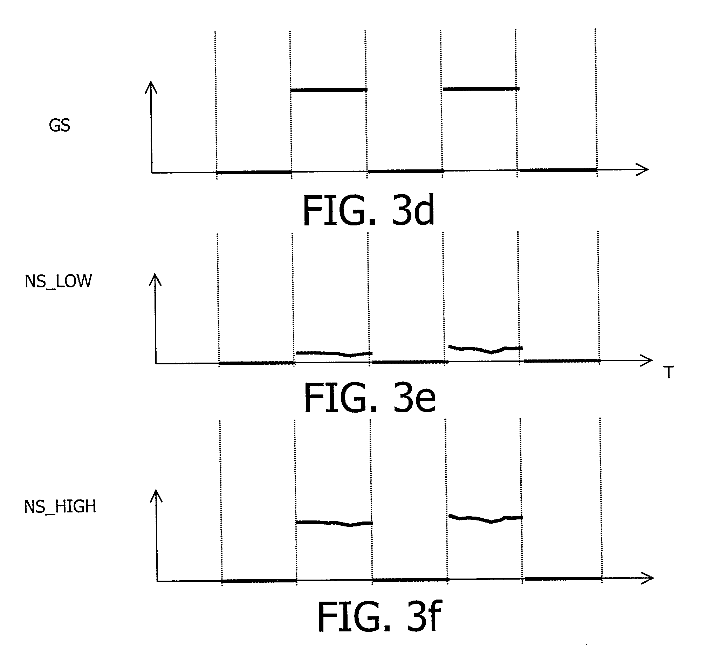

Ces intervalles de temps S sont déterminés de la manière suivante. Lorsque l'utilisateur B parle, le signal de sortie audio ASOUT présente un haut niveau d'intensité. Ledit signal ASOUT comporte également un signal parole ASOUT_1 et un signal bruit NSOUT. Le signal parole ASOUT_1 est ici plus important en intensité que son signal bruit NSOUT. Dans le cas contraire, lorsque l'utilisateur B écoute, le signal de sortie ASOUT présente un faible niveau d'intensité. La différence de niveaux d'intensité permet, d'une part, de déterminer les intervalles de temps d'écoute L et de parole S de l'utilisateur B, et, d'autre part, de générer, grâce au processeur DSP_B, un signal seuil GS représenté à la figure 3d. Le signal seuil GS est égal à 1 lors d'un intervalle de temps de parole S de l'utilisateur B (qui correspond à un intervalle de temps d'écoute L de l'interlocuteur A), et il est égal à 0 lors d'un intervalle de silence L de l'utilisateur B (qui correspond à un intervalle de parole S de l'interlocuteur A).

Après avoir déterminé les intervalles de temps où l'interlocuteur A ne parle pas, **dans une deuxième sous-étape 1b),** on isole, grâce au signal seuil GS, le signal bruit NS d'un signal audio AS issu du deuxième appareil de communication SA lors des intervalles de temps d'écoute L de l'interlocuteur A. A cet effet, on filtre, grâce audit signal seuil GS, le signal audio AS issu du deuxième appareil de communication SA et reçu par la première voie de réception ARP_B. La figure 3e représente un signal bruit NS_LOW résultant d'un filtrage par le signal seuil GS du signal audio AS_LOW de la figure 3a. La figure 3f représente un signal bruit NS_HIGH résultant d'un filtrage par le signal seuil GS du signal audio AS_HIGH de la figure 3b.

On notera que ce filtrage se fait avantageusement au niveau du premier appareil de communication SB puisqu'il est plus facile de détecter du côté de la partie réceptrice SB les intervalles de temps où l'interlocuteur A ne parle pas comme on l'a vu précédemment.

**Dans une troisième sous-étape 1c),** comme le bruit ambiant NS qui parasite le deuxième mobile SA est variable au cours du temps, on calcule un niveau de bruit moyen NSm. Ce niveau de bruit moyen NSm est calculé à partir d'une séquence SQ_{SAMP} d'échantillons SAMP de bruit, lesdits échantillons SAMP étant évalués par l'appareil de communication SB. On peut, par exemple, échantillonner à 1Khz.

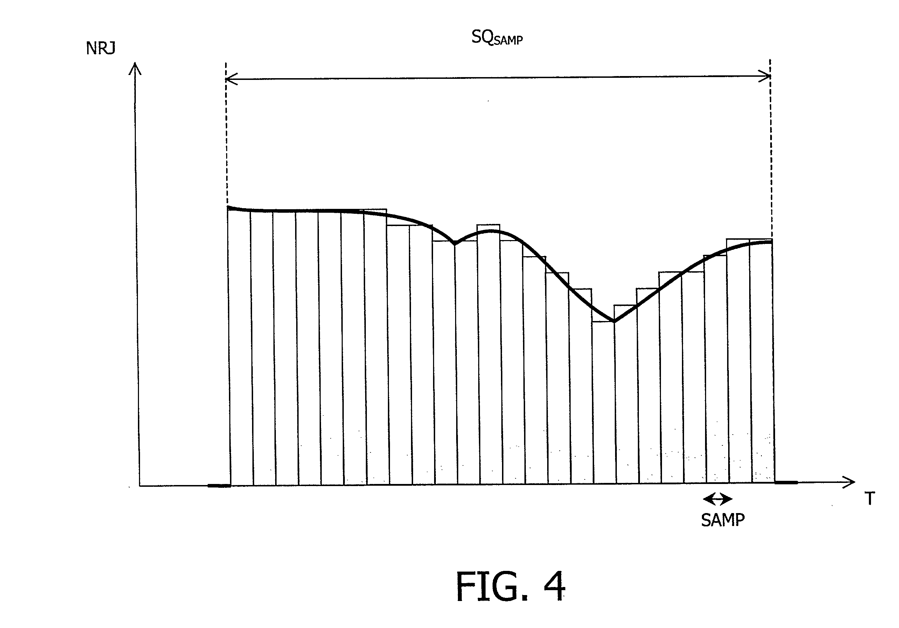

La séquence SQ_{SAMP} d'échantillons est représentée sur le graphe de la figure 4. Le graphe comporte une abscisse NRJ représentant l'énergie du bruit NS côté partie émettrice SA calculé du côté partie réceptrice SB, et une ordonnée représentant le temps T.

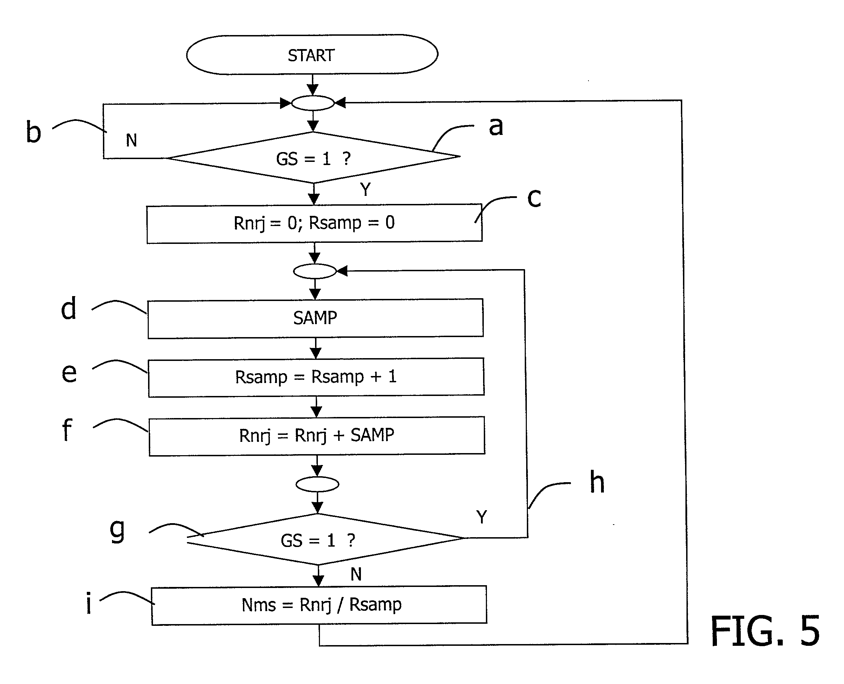

Le calcul du bruit moyen NSm s'effectue grâce au processeur DSP_B selon les étapes montrées sur l'organigramme de la figure 5.
- a) On teste si le signal seuil GS est égal à 1 (l'interlocuteur A parle t-il ou non ?),
   - b) si GS est égal à 0, retour à a) (l'interlocuteur A parle),
   - c) sinon (l'interlocuteur A ne parle pas), on initialise à 0 deux registres Rnrj et Rsamp du processeur DSP_B. Le premier registre Rnrj permet d'accumuler l'énergie de tous les échantillons utilisés pour calculer le bruit moyen NSm tandis que le deuxième registre Rsamp permet de calculer le nombre d'échantillons SAMP utilisés.
      - d) on prélève un échantillon SAMP de la séquence d'échantillon SQ_{SAMP},
      - e) on cumule le nombre d'échantillons SAMP prélevés (Rsamp = Rsamp + 1),
      - f) on cumule l'énergie des échantillons prélevés (Rnrj = Rnrj + SAMP),
      - g) on teste si le signal seuil GS est égal à 1,
         - h) si oui, retour à d) (tant que l'interlocuteur A ne parle pas, on cumule l'énergie)
         - i) sinon, le signal seuil GS est égal à 0 (l'interlocuteur A s'est remis à parler), et on calcule une valeur de bruit moyen NSm telle que NSm = Rnrj/Rsamp, et
         - retour à a)

La valeur de bruit moyen NSm ainsi calculée est une valeur de référence jusqu'au prochain cycle où le signal seuil GS est de nouveau égal à 1.

On notera que préférentiellement, le calcul par la partie réceptrice SB du bruit moyen NSm existant du côté de la partie émettrice SA se fait de manière continue.

**Dans une deuxième étape 2),** on vérifie que le signal vidéo VS envoyé par l'encodeur vidéo V_ENC de la partie émettrice SA est bien adapté audit bruit NSm.

De façon empirique, il a été démontré, dans un article intitulé "User evaluation : synthetic talking faces for interactive services" écrite par I.Pandzic, J.Ostermann et D.Millen, et édité par "Springer Verlag 1999" dans la revue "the Visual Computer", qu'un signal vidéo VS est bien adapté à un tel bruit NSm s'il comporte une fréquence d'images FR augmentant avec ledit bruit.

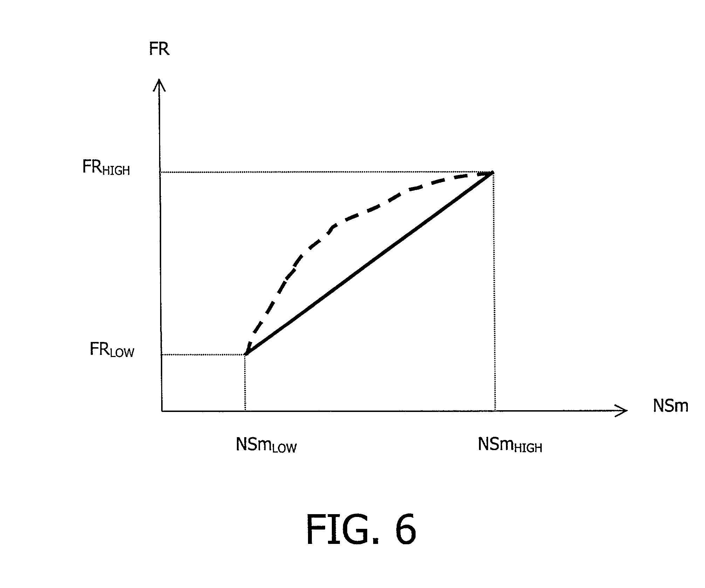

Le graphe de la figure 6 représente un exemple de fonction empirique FR(NSm). Lorsque le bruit moyen est faible NSm_{LOW}, la fréquence d'images FR peut se limiter à une valeur réduite FR_{LOW} sans dégradation subjective importante des informations signal vidéo VS reçu et signal audio AS reçu. Dans ce cas, l'utilisateur B comprend toujours son interlocuteur A en s'aidant de ce qu'il entend et de ce qu'il voit en même temps. Au contraire, lorsque le bruit moyen est fort NSm_{HIGH}, la fréquence d'images FR doit être grande.

Des valeurs typiques de la fréquence d'images FR aux deux extrémités du graphe sont FR_{LOW} = 10fps et FR_{HIGH} = 30fps (images par seconde).

On notera qu'afin d'établir une telle fonction empirique, selon un mode de réalisation non limitatif, on effectue des tests sur un groupe de 10 sujets, par exemple. Un premier sujet représente l'utilisateur B. Il regarde sur un écran de mobile une image représentant un interlocuteur A. on simule un monologue de l'interlocuteur A. On part de la plus petite fréquence FR_{LOW} et on simule un bruit NS. On choisit le bruit simulé en fonction de l'environnement dans lequel se trouve un mobile que l'on veut simuler. On part d'un bruit faible. Le premier sujet détermine s'il comprend ce que dit "l'interlocuteur A". S'il le comprend, on augmente le bruit, jusqu'à ce qu'il ne le comprenne plus. On détermine ainsi un premier point de la fonction empirique FR(NS). Par la suite, on augmente progressivement la fréquence des images FR par paliers de 5 images par seconde par exemple. A chaque palier, on détermine si le premier sujet comprend ce que dit "l'interlocuteur A". S'il le comprend, on augmente le bruit, jusqu'à ce qu'il ne le comprenne plus. On détermine ainsi d'autres points de la fonction empirique FR(NS) etc. On effectue le même test avec les autres sujets. On aura ainsi une bonne représentation de la fonction empirique FR(NS).

Afin d'effectuer la vérification, dans un premier mode de réalisation préférentiel, la fonction empirique FR(NS) est enregistrée dans une table LUT de correspondance comprise dans une mémoire (non représentée) du processeur DSP_B de la partie réceptrice SB. La mémoire est non volatile, de préférence réinscriptible. La table LUT comprend ainsi les fréquences d'images FR idéales correspondant à différentes valeurs de bruit ambiant NSm qui pourront être calculées.

Dans un deuxième mode de réalisation, la fonction empirique FR(NS) est représentée par le processeur DSP_B sous la forme d'une fonction non linéaire telle qu'une fonction logarithmique ou polynomiale de type y=mx+n. Cette forme non linéaire est par exemple symbolisée par les pointillés sur le graphe de la figure 6.

On notera que la fonction empirique FR(NS) est en particulier dépendante de l'environnement, de caractéristiques techniques de capteurs de bruit, des codeurs de voix et de vidéo, et de l'évolution des techniques de vidéocommunication. La fonction empirique FR(NS) peut ainsi être modifiée dans la mémoire du processeur.

On notera que ladite vérification s'effectue préférentiellement de manière continue comme pour le calcul du bruit moyen NSm.

On notera que dans le cas où il existerait beaucoup trop de bruit ambiant NS du côté de l'interlocuteur A, on n'effectue pas cette deuxième étape 2). Ainsi, par exemple, il y a trop de bruit si le bruit NS isolé est supérieur à 10 dB.

Dans un premier mode de réalisation non limitatif, on ne fait rien par la suite, car dans ce cas, cela ne servirait à rien.

Dans un second mode de réalisation non limitatif, on prend la plus petite fréquence FR_{LOW} car ainsi, on consommera moins de bande passante lors d'une transmission de séquence d'images, et par conséquent cela coûtera moins cher.

On notera par ailleurs que dans le cas où il y aurait trop de bruit du côté de l'utilisateur B, on ne fait rien car on aurait trop de difficultés à calculer le signal seuil GS. Aussi, dans ce cas, exécute-t-on ni les sous-étapes 1a) à 1c), ni la deuxième étape 2). Ainsi, par exemple, il y a trop de bruit lorsque l'écart type entre le bruit du côté de l'utilisateur B et le signal audio du côté dudit utilisateur B est préférentiellement égal à 10 dB.

**Dans une troisième étape 3),** on calcule une fréquence d'images adaptée FR_{TRANS} audit bruit NSm calculé, et qui, par conséquent, permet d'adapter la qualité d'un appel de vidéoconférence en fonction du bruit ambiant. Le calcul se fait au moyen de la fonction empirique FR(NS).

**Dans une quatrième étape 4),** la partie réceptrice SB envoie la fréquence d'images adaptée FR_{TRANS} à la partie émettrice SA par le canal de contrôle CP_B.

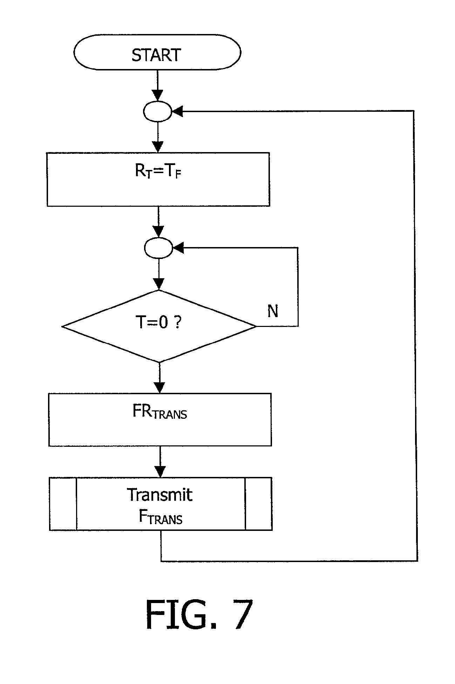

Selon un premier mode de réalisation non limitatif appelé "mode circuit", la partie réceptrice SB réserve à certaines périodes de temps le canal de contrôle CP_B en vue d'envoyer la fréquence d'images adaptée FR_{TRANS}, et ce grâce à des moyens de réservation/libération MM de canal. Lesdits moyens MM sont compris préférentiellement dans les moyens de contrôle de retour CNTRL. Lesdits moyens de réservation/iibération MM de canal envoient en particulier des messages FRM à la partie émettrice SA. Les envois de messages FRM se font périodiquement, comme le montre la figure 7.
- Au début d'un cycle périodique, la partie réceptrice SB initialise un registre de période R_{T} à une période T_{F}. La période T_{F} représente un laps de temps qui s'écoule entre deux envois de fréquence d'images adaptée FR_{TRANS},
- une fois qu'un laps de temps d'une période T_{F} s'est écoulé, la partie réceptrice SB calcule une valeur de fréquence d'images adaptée FR_{TRANS} selon l'étape 3,
- ensuite, la partie réceptrice SB envoie un premier message FRM1 de réservation de canal de contrôle CP_B,
- la partie réceptrice SB transmet ladite valeur FR_{TRANS} via le canal de contrôle CP_B à la partie émettrice SA,
- la partie émettrice SA reçoit la valeur FR_{TRANS} au niveau de son encodeur V_ENC. Ce dernier accorde sa fréquence d'images courante FRc avec la nouvelle fréquence d'images adaptée FR_{TRANS} reçue, et
- la partie réceptrice SB envoie un deuxième message FRM2 de libération du canal de contrôle CP_B,
- un autre cycle recommence.

Ainsi, selon ce premier mode de réalisation, on transmet toujours au deuxième appareil de communication SA, la fréquence d'images adaptée FR_{TRANS} au bruit ambiant NS dudit deuxième appareil.

On notera que, la période T_{F} est, de préférence, sélectionnée en vue d'optimiser la communication entre les deux parties SA et SB. Par exemple, dans le cas d'une communication basée sur le standard UMTS, un multiple de 10ms est choisi, les 10ms correspondant à une durée de trame de données envoyée sur un canal. Ce mode circuit pourra être également appliqué au niveau du standard EDGE.

Selon un deuxième mode de réalisation non limitatif appelé "mode paquet", lorsque la partie réceptrice SB détecte un changement significatif du bruit ambiant NS du côté de la partie émettrice SA, par exemple, lorsqu'il existe une différence de 3db entre deux valeurs de bruit calculées, elle calcule une valeur de fréquence d'images adaptée FR_{TRANS} selon l'étape 3.

Selon une première variante de réalisation de ce second mode, si la fréquence d'images courante FRc du signal vidéo VS reçu par la partie réceptrice SB est supérieure ou égale à la fréquence d'images adaptée FR_{TRANS} qui a été calculée, on ne fait rien, car dans ce cas, il existe une bonne compréhension de l'interlocuteur A par l'utilisateur B. Si la fréquence d'images courante FRc est inférieure à la fréquence d'images adaptée FR_{TRANS}, il y a un problème de compréhension et on effectue les étapes suivantes :
- A) la partie réceptrice SB envoie à une station de base BS (non représentée) un premier message FRM1 de demande d'envoi de paquet. Cette dernière lui permet d'envoyer un paquet si elle a des ressources (créneaux dans lesquels la station de base est disponible pour envoyer des paquets) non occupées,
- B) dans ce cas, un lien de communication est établit pendant une durée de temps égale au nombre de données à envoyer, ici la fréquence d'images adaptée calculée FR_{TRANS}, soit un certain nombre d'images par seconde,
- C) par la suite, le paquet comprenant ladite fréquence FR_{TRANS} est envoyé à la partie émettrice SA par l'intermédiaire de la station de base BS,
- D) la partie émettrice SA reçoit la valeur FR_{TRANS} au niveau de son encodeur V_ENC. Celui-ci accorde sa fréquence d'images courante FRc avec la nouvelle fréquence d'images adaptée FR_{TRANS} reçue.
Selon une seconde variante de réalisation de ce second mode, si la fréquence d'images courante FRc du signal vidéo VS reçu par la partie réceptrice SB est différente de la fréquence d'images adaptée FR_{TRANS} qui a été calculée, on effectue les étapes A), B) et C) et D) citées ci-dessus.

Ce second mode de réalisation s'applique, par exemple, dans le cas d'une communication basée sur les standards GPRS, EGPRS ("Enhanced GPRS") ou encore UMTS. Ce second mode est plus performant que le premier mode en terme d'utilisation de ressources radio. Par conséquent, économiquement parlant, ce mode sera en général moins cher qu'un mode circuit de même capacité moyenne, car la communication sera facturée en fonction du volume de données transmises et non plus en fonction de la durée de communication. Plus il y aura de volume de données, moins la communication sera chère en mode paquet.

On notera que, avantageusement, le deuxième appareil de communication audiovisuelle SA comporte des moyens d'ajustement ADJ de la fréquence d'images courante FRc de son encodeur vidéo V_ENC en fonction de la fréquence d'images adaptée FR_{TRANS} envoyée par le premier appareil de communication audiovisuelle SB, cette dernière fréquence étant fonction du signal bruit NS. Ces moyens d'ajustement ADJ sont, par exemple, implémentés dans un programme chargé dans le processeur DSP_A, ledit programme étant apte à changer une vitesse de rafraîchissement d'une image en augmentant ou réduisant un temps de balayage associé à chaque pixel compris dans ladite image.

Ainsi, selon la présente invention, la partie réceptrice SB peut commander à la partie émettrice SA d'augmenter ou de diminuer la fréquence courante FRc des images qu'elle lui envoie selon le bruit ambiant NS. Lorsque le bruit ambiant NS est important, on augmente la quantité d'images envoyée et donc la qualité de compréhension entre l'utilisateur B et son interlocuteur A. L'utilisateur B voit mieux son interlocuteur A sur l'écran SCR de son mobile, et notamment ses lèvres. De ce fait, l'utilisateur B va interpréter ce que dit son interlocuteur A avec un taux d'erreur moins grand que s'il le voyait moins bien.

On notera que l'adaptation de la fréquence d'images courante du signal vidéo VS reçu par la première voie de réception vidéo VRP_B peut également se faire en fonction d'un rapport signal audio AS sur bruit NS. Cependant, cette adaptation est plus complexe. De plus, on a fait l'hypothèse que l'interlocuteur A parle à une distance constante de son mobile SA. De ce fait, le signal parole associé possède une énergie moyenne quasi constante. Par conséquent, on n'a pas besoin de prendre en compte le signal parole et donc l'ensemble du signal audio lors de cette adaptation.

Comme nous l'avons dit précédemment, pour des raisons de simplification, la présente invention ne décrit qu'un système de communication unidirectionnel SYS comprenant, d'une part, un premier appareil de communication audiovisuelle SB apte à recevoir un signal audio AS et un signal vidéo VS, et, d'autre part, un deuxième appareil de communication audiovisuelle SA apte à émettre ledit signal audio AS et ledit signal vidéo VS. Il est bien entendu que ledit système de communication est bidirectionnel. Le deuxième appareil SA est également apte à recevoir des signaux audio et vidéo, et le premier appareil est également apte à émettre de tels signaux audio et vidéo. Aussi, avantageusement, le deuxième appareil de communication audiovisuelle SA comporte également des moyens de contrôle, d'identification, de calcul, et de réservatlon/libération identiques à ceux du premier appareil, afin que l'interlocuteur A puisse de son côté mieux comprendre l'utilisateur B lorsqu'il y a du bruit du côté de l'utilisateur B, et ce sans trop consommer de ressources et d'énergie.

Ainsi, d'après ce qui précède, le système de communication audiovisuelle SYS bidirectionnel comprend un premier appareil de communication audiovisuelle et un deuxième appareil de communication audiovisuelle, lesdits appareils comprenant chacun une voie de réception/émission audio et une voie de réception/émission vidéo, lesdites voies étant respectivement aptes à recevoir/émettre un signal audio et un signal vidéo. De plus, ledit système SYS, comporte au moins un canal de contrôle CP, ledit canal étant apte à faire transiter une fréquence d'images FR d'un signal vidéo VS envoyée par le premier appareil de communication au deuxième appareil de communication, ladite fréquence étant adaptée en fonction d'un signal bruit NS compris dans un signal audio AS, ledit signal vidéo VS et ledit signal audio AS ayant été envoyés par ledit deuxième appareil de communication audit premier appareil de communication.

Ainsi l'invention décrite a pour avantage d'améliorer la communication entre deux utilisateurs d'appareils de communication audiovisuelle.

Un deuxième avantage est que, grâce à la présente invention, il est possible d'obtenir une consommation moins grande en énergie au niveau du mobile. En effet, lorsqu'il y a peu de bruit, il n'est pas forcément nécessaire d'envoyer une séquence d'images à une fréquence de 30fps. Il suffit d'utiliser une fréquence d'images de 10fps par exemple. Ainsi, dans ce cas, une batterie de mobile se déchargera moins vite. Dans le mode circuit, on applique toujours la fréquence minimale optimale. Ainsi la consommation d'énergie est toujours adaptée à ce dont on a besoin.

Enfin, un troisième avantage est un abaissement possible de coûts monétaires. En effet, étant donné que l'on peut régler la fréquence d'images en fonction du bruit, en mode circuit, cela coûte moins cher de transmettre une séquence d'images à 10fps par exemple qu'à 30 fps. C'est pourquoi la fréquence utilisée est toujours la plus petite optimale possible, sans bien sûr que la communication en souffre. En mode paquet, on pourra choisir la première variante ou la seconde variante. Par exemple, si lorsqu'on a un gros volume de données, la communication est moins chère, on aura tendance à prendre la première variante.

Bien entendu, l'invention n'est nullement limitée au domaine de la téléphonie mobile. L'invention a été décrite notamment pour des appareils de communication audiovisuelle portables sans fil dans le domaine de la téléphonie mobile, parce qu'ils sont souvent soumis à un bruit ambiant qui ne peut être réduit facilement. Cependant, l'invention peut s'étendre à d'autres domaines, notamment aux domaines de communication multimédia entre des appareils de communication fixes.

Bien entendu, le cadre de l'invention n'est nullement limité aux modes de réalisation décrits ci-dessus et des variations ou modifications peuvent y être apportés sans pour autant s'écarter de l'esprit et de la portée de l'invention.

Aucun signe de référence dans le présent texte ne doit être interprété comme limitant ledit texte.

Le verbe "comprendre" et ses conjugaisons ne doivent également pas être interprétés de façon limitative, i.e. ils ne doivent pas être interprétés comme excluant la présence d'autres étapes ou éléments outre ceux définis dans la description, ou encore, comme excluant une pluralité d'étapes ou d'éléments déjà listés après ledit verbe et précédés du mot "un" ou "une".

## Revendications

1. Appareil (SB) de communication audiovisuelle comprenant une voie de réception audio (ARP_B) et une voie de réception vidéo (VRP_B), lesdites voies étant respectivement aptes à recevoir un signal vidéo (VS) et un signal audio (AS) issus d'un deuxième appareil de communication audiovisuelle (SA), **caractérisé en ce qu'**il comporte des moyens de contrôle de retour (CNTRL) aptes à adapter une fréquence d'images (FR) dudit signal vidéo (VS) en fonction d'un signal bruit (NS), le signal audio (AS) comprenant ledit signal bruit (NS).

2. Appareil de communication audiovisuelle selon la revendication 1, **caractérisé en ce qu'**il comporte en outre des moyens d'identification (GS) d'au moins un intervalle de temps (L) pendant lequel seul un signal bruit (NS) est reçu par la voie de réception audio (ARP_B).

3. Appareil de communication audiovisuelle selon la revendication 1, **caractérisé en ce qu'**il comporte en outre des moyens de calcul d'une fréquence (FR) adaptée audit signal bruit (NS).

4. Procédé de communication audiovisuelle étant apte à utiliser une voie de réception audio (ARP_B) et une voie de réception vidéo (VRP_B), lesdites voies étant respectivement aptes à recevoir un signal vidéo (VS) et un signal audio (AS) issus d'un deuxième appareil de communication audiovisuelle (SA), **caractérisé en ce qu'**il comporte une étape d'adaptation d'une fréquence d'images (FR) dudit signal vidéo (VS) en fonction d'un signal bruit (NS), le signal audio comprenant ledit signal bruit (NS).

5. Procédé de communication audiovisuelle selon la revendication 4, **caractérisé en ce que** l'étape d'adaptation comporte une sous-étape :
- d'identification d'au moins un intervalle de temps (L) pendant lequel seul un signal bruit (NS) est reçu par la voie de réception audio (ARP_B).

6. Procédé de communication audiovisuelle selon la revendication 4, **caractérisé en ce que** l'étape d'adaptation comporte une sous-étape supplémentaire :
- de calcul d'une fréquence (FR) adaptée audit signal bruit (NS).

7. Appareil (SA) de communication audiovisuelle comprenant une voie d'émission audio (ATP_A) et une voie d'émission vidéo (VTP_B), lesdites voies étant respectivement aptes à émettre un signal vidéo (VS) et un signal audio (AS) vers un premier appareil de communication audiovisuelle (SB), **caractérisé en ce qu'**il comporte des moyens d'ajustement (ADJ) d'une fréquence d'images courante (FRc) dudit signal vidéo (VS) en fonction d'une fréquence d'images (FR) envoyée par ledit premier appareil de communication audiovisuelle (SB), cette dernière fréquence étant fonction d'un signal bruit (NS), ledit signal audio (AS) comprenant ledit signal bruit (NS).

8. Système de communication audiovisuelle (SYS) comprenant un premier appareil de communication audiovisuelle (SB) et un deuxième appareil de communication audiovisuelle (SA), lesdits appareils comprenant chacun une voie de réception/émission audio et une voie de réception/émission vidéo, lesdites voies étant respectivement aptes à recevoir/émettre un signal audio et un signal vidéo, **caractérisé en ce qu'**il comporte au moins un canal de contrôle (CP), ledit canal étant apte à faire transiter une fréquence d'images (FR) d'un signal vidéo (VS) envoyée par le premier appareil de communication au deuxième appareil de communication, ladite fréquence étant adaptée en fonction d'un signal bruit (NS) compris dans un signal audio (AS), ledit signal vidéo (VS) et ledit signal audio (AS) ayant été envoyés par ledit deuxième appareil de communication audit premier appareil de communication.
